# EUROPÄISCHE PATENTSCHRIFT

(11) **EP 1 549 873 B1**
(45) Veröffentlichungstag und Bekanntmachung des Hinweises auf die Patenterteilung: **15.12.2010**
(21) Anmeldenummer: 03769345.4
(22) Anmeldetag: 02.10.2003
(51) Int. Cl.: F16L 37/00

(54) **AUFNAHMETEIL EINER FLUID-STECKVERBINDUNG**
FEMALE PART OF A FLUID PLUG CONNECTION
ELEMENT DE RECEPTION DE CONNECTEUR ENFICHABLE POUR FLUIDES

(30) Priorität: 10.10.2002 DE 20215593 U
(43) Veröffentlichungstag der Anmeldung: 06.07.2005
(73) Patentinhaber: Voss Automotive GmbH, 51688 Wipperfürth (DE)
(72) Erfinder: HAGEN, Harald, 51688 Wipperfürth (DE)
(74) Vertreter: Patentanwälte Dr. Solf & Zapf
(86) Internationale Anmeldenummer: PCT/EP2003/010901
(87) Internationale Veröffentlichungsnummer: WO 2004/036103

(56) Entgegenhaltungen:
- EP-A- 0 132 673
- DE-A- 3 341 030
- DE-U- 8 205 016

## Beschreibung

Die vorliegende Erfindung betrifft gemäß dem Oberbegriff des Patentanspruchs 1 ein Aufnahmeteil einer Fluid-Steckverbindung (wobei sich der Begriff "Fluid" auf beliebige Strömungs- bzw. Druckmedien bezieht, d. h. auf Flüssigkeiten und/oder Gase), bestehend aus einem lösbar in eine Anschlußöffnung eines Gehäuseteils einsetzbaren Einsatzteil mit einer Durchgangsöffnung und einem derart im Bereich der Durchgangsöffung gehalterten, zumindest bereichsweise radial elastisch verformbaren Halteringelement, dass ein mit einem Steckerschaft von einer Einsteckseite her dichtend in die Durchgangsöffnung einzusteckendes Steckerteil durch das Halteringelement formschlüssig gegen Lösen verrastbar ist, wobei das Halteringelement auf der der Einsteckseite gegenüberliegenden Stirnseite des Einsatzteiles mit einem Stecker-Arretierabschnitt außerhalb der Durchgangsöffnung des Einsatzteils angeordnet ist und über einen in das Einsatzteil eingreifenden Halteabschnitt mit dem Einsatzteil verbunden ist.

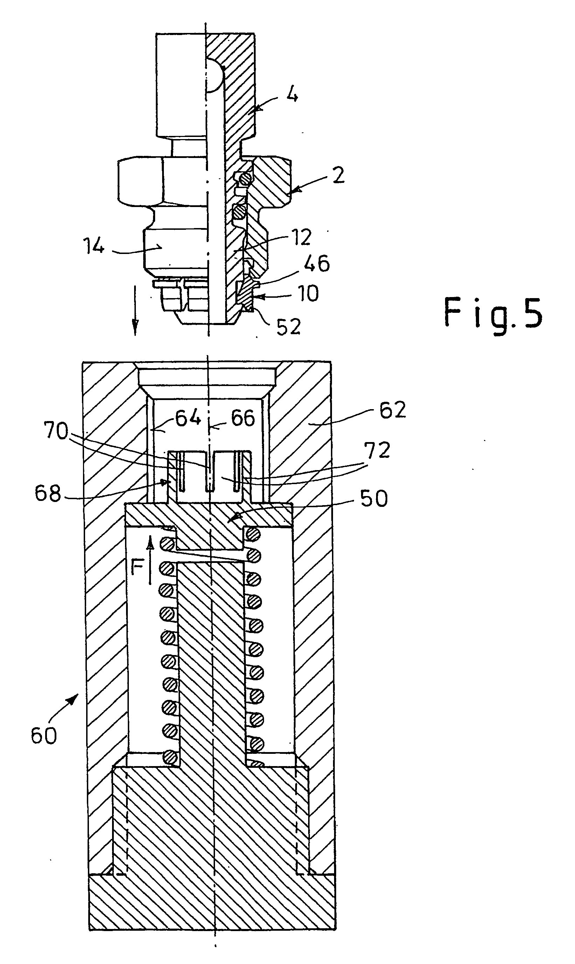

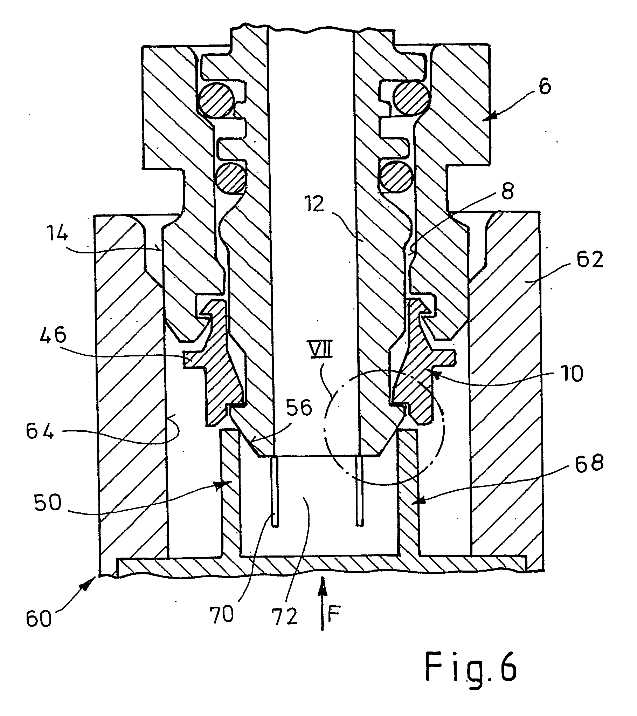

Das Dokument EP 0 132 673 A2 beschreibt eine Verbindungsvorrichtung für Druckleitungen mit einem Aufnahmeteil der dem Oberbegriff des Anspruchs 1 entsprechenden Art (insbesondere Figuren 5 und 6). Dabei ist ein Haltering in einer Ringnut in der Innenwandung des Einsatzteils (Überwurfschraube) angeordnet. Dazu ist der bekannte Haltering nicht als umfangsgemäß geschlossener (durchgehender) Ring ausgebildet, sondern er weist eine seitliche Öffnung mit einem Öffnungswinkel von 100° auf, so dass der Haltering für die Anordnung in der inneren Nut in einem radial zusammengedrückten Zustand axial in den Bereich der Nut gebracht werden kann, wobei er sich dann nach dem Loslassen dort wieder aufweiten und in den Nutgrund legen kann. Für die Halterung eines einzusteckenden Steckerteils weist der bekannte Haltering in zwei diametral gegenüberliegenden Umfangsbereichen axial vorstehende, federelastische Arme auf, die an ihren freien Enden Rastzungen und diesen vorgeordnete Haltezungen besitzen. Die Rastzungen verlaufen schräg in Einsteckrichtung des Steckers und radial nach innen, weshalb ein Lösen der Verrastung des Steckerteils aus der verrasteten Position schwierig ist. Zudem können über die elastischen Arme nur geringe, in Löserichtung des Steckerteils wirkende Haltekräfte aufgenommen werden.

Aus der EP 0 005 865 B1 ist ein Steckverbinder bekannt, wobei zwischen dem in das Gehäuseteil eingesetzten, als Einschraubstück (Überwurfschraube) mit Außengewinde ausgebildeten Einsatzteil und einer Stufenfläche innerhalb des Gehäuseteils eine Ringkammer gebildet ist, in der das Halteringelement sitzt. Zum Lösen des Steckerteils wird das Einschraubstück zusammen mit dem arretierten Stecker herausgeschraubt, und anschließend kann auf der dann frei zugänglichen Stirnseite des Einschraubteils das Halteringelement vom Steckerschaft entfernt werden, um dann den Stecker ganz aus dem Einschraubteil herausziehen zu können. Diese bekannte Steckverbindung hat sich in der Praxis gut bewährt, allerdings könnte die Handhabung beim Montage- und Lösevorgang noch verbessert werden. Außerdem unterliegt das Halteringelement nach dem Lösen einer nicht geringen Verlustgefahr, weil es gänzlich vom Stecker entfernt werden muß und dann folglich ein loses Einzelteil darstellt.

Die EP 1 074 782 A1 beschreibt einen Steckverbinder mit einem Aufnahmeteil, wobei das Halteringelement unverlierbar in einer inneren Ringkammer des Einsatzteils integriert angeordnet ist. Durch diese Anordnung ist aber die Montage, d. h. das Einsetzen des Halteringelementes in die innere Ringkammer innerhalb der Durchgangsöffnung schwierig, weil das ganze Halteringelement gleichzeitig radial zusammengedrückt und axial in die Durchgangsöffnung eingeführt werden muß. Ferner ist auch eine eventuelle Demontage zum Zwecke eines Austausches schwierig und umständlich, weil das einmal in die innere Ringkammer eingesetzte Halteringelement von außen nur noch schlecht zugänglich ist. Schließlich führt diese bekannte Anordnung des Halteringelementes auch zu einer großen Bauform insbesondere in radialer Richtung, weil das integrierte Halteringelement in radialer Richtung einen gewissen Bewegungsspielraum benötigt. Diese bekannte Ausführung ist daher nur für größere Nenngrößen bzw. Nennweiten der Steckverbindung geeignet.

Der vorliegende Erfindung liegt die Aufgabe zugrunde, ein Aufnahmeteil der genannte Art zu schaffen, welches sich auch gut für sehr kleine Nenngrößen/- weiten eignet und hohe Haltekräfte sowie eine gute Handhabung bei Montage und Demontage gewährleistet.

Erfingdungsgemäß wird dies durch die Merkmale des unabhängigen Anspruchs 1 erreicht. Weitere vorteilhafte Ausgestaltungsmerkmale der Erfindung sind in den abhängigen Ansprüchen sowie der folgenden Beschreibung enthalten.

Durch die erfindungsgemäße Ausgestaltung können durch den sich an der Stirnseite des Einsatzteils abstützenden Ringansatz des Halteringelementes hohe Stecker-Haltekräfte aufgenommen werden. Zudem läßt sich das Halteringelement sehr einfach und schnell durch einfaches Einrasten des Halteabschnittes montieren. Auch eine eventuelle Demontage ist leicht möglich, da der außerhalb des Einsatzteils vor dessen Stirnseite liegende Stecker-Arretierabschnitt dann als eine Art Griffstück verwendet werden kann. Durch die Anordnung des Stecker-Arretierabschnittes außerhalb der Durchgangsöffnung eignet sich die erfindungsgemäße Lösung besonders für kleine Nenngrößen (beispielsweise 6mm, NG 6), weil ja nur noch der Halteabschnitt in die Durchgangsöffnung eingreift und dieser auch nur einen geringen radialen Spielraum zum Einrasten benötigt, während die radiale elastische Verformung des Halteringelementes zum Verrasten des Steckerteils erfindungsgemäß hauptsächlich außerhalb des Einsatzteils vor dessen Stirnseite im Bereich des Arretierabschnittes stattfindet. Weiterhin ist die erfindungsgemäße Ausgestaltung auch bezüglich des Lösevorgangs des Steckerteils vorteilhaft, weil der extern angeordnete Arretierabschnitt zum Spreizen zwecks Entriegeln des Steckerteils gut zugänglich ist.

Anhand eines in der Zeichnung veranschaulichten, bevorzugten Ausführungsbeispiels soll die Erfindung genauer erläutert werden. Dabei zeigen:
- Fig. 1: eine halbgeschnittene Seitenansicht einer Steckverbindung mit einem erfindungsgemäßen Aufnahmeteil und einem noch nicht gesteckten Steckerteil,
- Fig. 2: die Steckverbindung nach Fig. 1 im gesteckten und verriegelten Zustand des Steckerteils,
- Fig. 3: eine gesonderte Darstellung analog zu Fig. 1 und 2 nur des Einsatzteils,
- Fig. 4: eine gesonderte Darstellung nur des Halteringelementes,
- Fig. 5: einen Längsschnitt einer speziell an die Erfindung angepaßten Lösevorrichtung mit Darstellung einer gesteckten und verriegelten Steckverbindung nach Fig. 2,
- Fig. 6: eine vergrößerte Teilansicht aus Fig. 5 während des Lösevorgangs und
- Fig. 7: vergrößerte Detailansichten des Bereichs VII in Fig. 6, und zwar
- Fig. 7a: in einer Zwischenstellung während des Lösevorgangs und
- Fig. 7b: die Stellung im gelösten bzw. entriegelten Zustand.

In den verschiedenen Figuren der Zeichnung sind gleiche Teile stets mit den gleichen Bezugszeichen versehen.

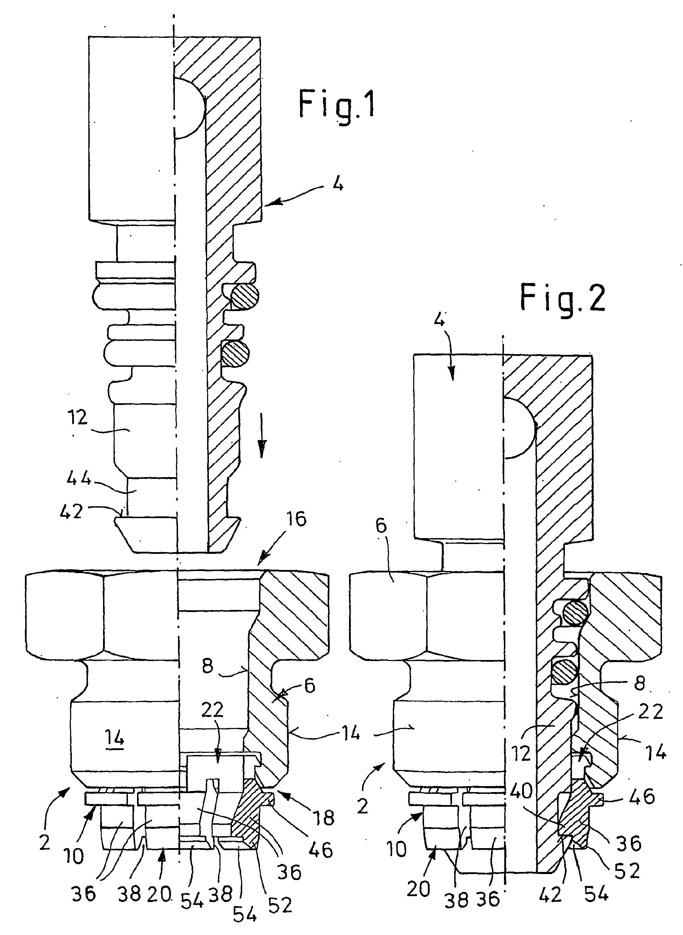

Eine zunächst in Fig. 1 und 2 veranschaulichte Steckverbindung besteht aus einem erfindungsgemäßen Aufnahmeteil 2 und einem einzusteckenden Steckerteil 4. Das Aufnahmeteil 2 besteht seinerseits aus einem Einsatzteil 6 mit einer Durchgangsöffnung 8 und einem im Bereich der Durchgangsöffnung 8 gehalterten, zumindest bereichsweise radial elastisch verformbaren Halteringelement 10. Das Steckerteil 4 ist mit einem Steckerschaft 12 umfangsgemäß dichtend in die Durchgangsöffnung 8 des Einsatzteils 6 einsteckbar und in der eingesteckten Position über das Halteringelement 10 gegen Lösen, d. h. gegen Herausziehen, formschlüssig arretierbar bzw, verrastbar.

In der dargestellten Ausführungsform weist das Einsatzteil 6 ein Außengewinde 14 auf, so dass es als Einschraubteil bzw. Überwurfschraube in eine entsprechende Gewindebohrung eines nicht dargestellten, praktisch beliebigen Gehäuseteils, beispielsweise eines Druckaggregates, einschraubbar ist. Alternativ könnte das Einsatzteil 6 aber auch über andere geeignete Verbindungsmittel mit dem Gehäuseteil lösbar verbunden werden, beispielsweise über eine Bajonettverbindung oder dergleichen.

Erfindungsgemäß ist das Halteringelement 10 auf der der Stecker-Einsteckseite 16 gegenüberliegenden Stirnseite 18 des Einsatzteils 6 mit einem Stecker-Arretierabschnitt 20 außerhalb der Durchgangsöffnung 8, also vor der Stirnseite 18, angeordnet und greift zur Halterung über einen Halteabschnitt 22 rastend in das Einsatzteil 6 ein.

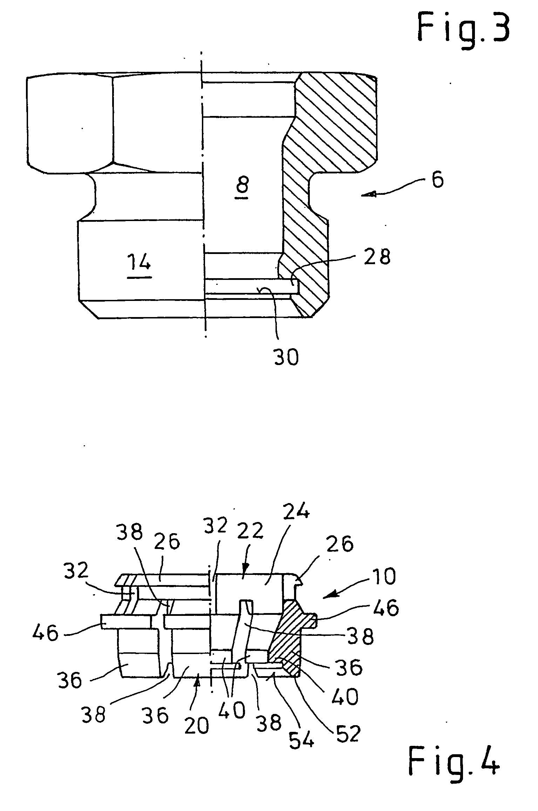

Gemäß Fig. 4 ist das Halteringelement 10 mit seinen beiden Abschnitten, dem Arretierabschnitt 20 und dem Halteabschnitt 22, als einstückiges Formteil aus Kunststoff ausgebildet, beispielsweise aus POM oder dergleichen. Dabei ist der Halteabschnitt 22 von einem axial in die Durchgangsöffnung 8 eingreifenden Ringkragen 24 mit einer radial nach außen vorspringenden Rastkante 26 gebildet. Diese Rastkante 26 hintergreift formschlüssig rastend eine innerhalb der Durchgangsöffnung 8 durch eine Ringnut 28 gebildete Haltekante 30 (siehe dazu insbesondere Fig. 3 sowie Fig. 1 und 2). Bei der mit der Haltekante 30 zusammenwirkenden Rastkante 26 kann es sich grundsätzlich um eine umfangsgemäß geschlossene Rastverbindung handeln, wobei die Rastkante 26 als radial federnde Rastnase ausgebildet sein kann. Vorzugsweise ist aber vorgesehen, dass der Ringkragen 24 im Bereich der Rastkante 26 durch mindestens zwei diametral gegenüberliegende axiale Schlitze 32 (siehe Fig. 4) mindestens in zwei radial federelastische Rastbereiche unterteilt ist.

Gemäß Fig. 2 wird trotz dieser bevorzugten Radialelastizität eine sichere Halterung des Halteringelementes 10 dadurch erreicht, dass der Halteabschnitt 22 durch den eingesteckten und verrasteten Steckerschaft 12 gegen Lösen von der Haltekante 30 (bzw. aus der Ringnut 28) blockiert wird, und zwar durch radiale Anlage der elastischen Rastbereiche des Halteabschnittes 22 am Außenumfang des Steckerschaftes 12. Diese Halterung ist für den Einsteckvorgang des Steckerschaftes 12 wichtig, um zu vermeiden, dass der Steckerschaft 12 beim Einstecken womöglich das Halteringelement 10 von dem Einsatzteil 6 lösen könnte. Dies ist durch die beschriebene Ausgestaltung ausgeschlossen.

Wie sich weiterhin aus Fig. 1, 2 und 4 ergibt, besteht der Arretierabschnitt 20 des Halteringelementes 10 aus mehreren (mindestens zwei) radialsymmetrisch ausgebildeten, radial federelastischen Rastarmen 36, die jeweils durch axiale Schlitze 38 voneinander getrennt sind. Diese Rastarme 36 weisen radial nach innen weisende Rastansätze 40 auf, die mit einer Raststufe 42 des eingesteckten Steckerschaftes 12 formschlüssig rastend zusammenwirken. Die Raststufe 42 des Steckerschaftes 12 ist in der dargestellten Ausführung von einer äußeren Steckerringnut 44 gebildet (siehe insbesondere Fig. 1).

Das Halteringelement 10 weist ferner auf seinem Außenumfang einen radialen Ringansatz 46 auf, der zur Einsetzbegrenzung, vor allem aber auch zur Abstützung von in Stecker-Löserichtung (Zugrichtung) wirkenden Haltekräften, vor der Stirnseite 18 des Einsatzteils 6 liegt. Durch diese Abstützung können vorteilhafterweise sehr hohe Haltekräfte aufgenommen werden. Gemäß Fig. 4 erstrecken sich hierbei die die Rastarme 36 trennenden Schlitze 38 axial über den Ringansatz 46 hinaus, so dass auch der Ringansatz 46 in mehrere Abschnitte unterteilt ist; jeder dieser Abschnitte ist an einem der Rastarme 36 vorhanden.

Wie weiterhin am Besten in Fig. 4 zu sehen ist, sind einerseits die den Halteabschnitt 22 unterteilenden Schlitze 32 und andererseits die die Rastarme 36 trennenden Schlitze 38 in Umfangsrichtung gegeneinander versetzt, wobei sie sich vorzugsweise in axialer Richtung gesehen überlappen. Dadurch hat das Halteringelement 10 in Umfangsrichtung praktisch eine mäanderförmige Gestalt, wobei einerseits jeweils benachbarte Rastarme 36 über einen der Rastbereiche des Halteabschnittes 22 bzw. andererseits jeweils benachbarte Rastbereiche des Halteabschnittes 22 über einen der Rastarme 36 verbunden sind. Diese Ausgestaltung führt zu einer sehr geringen axialen Baulänge bzw. Bauhöhe des Halteringelementes 10.

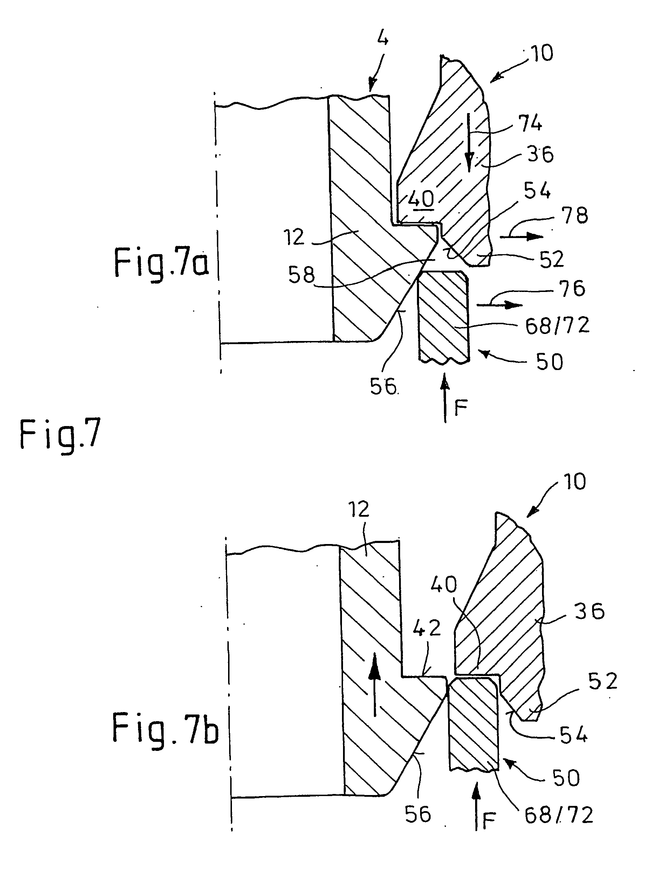

In weiterer Ausgestaltung der Erfindung ist das Halteringelement 10 auf seiner freien, die Stirnseite 18 des Einsatzteils 6 überragenden Seite derart ausgebildet, dass es mittels eines Lösewerkzeugs 50 (vgl. dazu Fig. 5 bis 7) zur Freigabe des Steckerteils 4 durch Aufheben der formschlüssigen Verrastung radial spreizbar ist. Dazu weisen die Rastarme 36 an ihren freien Stirnenden axiale, sich über die Rastansätze 40 hinaus erstreckende Löseansätze 52 mit inneren, insgesamt konusförmigen Schrägflächen 54 derart auf, dass mit einem im Wesentlichen hülsenförmigen Lösewerkzeug 50 durch axialen Andruck über die Schrägflächen 54 die Rastarme 36 spreizbar sind, und zwar soweit, bis die Rastansätze 40 in radialer Richtung die Raststufe 42 des Steckerschaftes 12 freigeben (siehe dazu Fig. 7b). Dabei ist es zusätzlich vorteilhaft, dass in der verrasteten Arretierstellung zwischen einer am freien Ende des Steckerschaftes 12 gebildeten äußeren Konusfläche 56 und den Schrägflächen 54 der Rastarme 36 ein sich in Einführrichtung des Lösewerkzeugs 50 verengender Einführringraum 58 ergibt, wozu auf Fig. 7a verwiesen wird. Hierdurch ergibt sich die Möglichkeit, das hülsenförmige Lösewerkzeug 50 derart durch Schlitze in einzelne radial verformbare Abschnitte zu unterteilen, das diese über die Konusfläche 56 des Steckerschaftes 12 zusätzlich radial nach außen verformt werden und dadurch das Spreizen der Rastarme 36 noch unterstützt wird. Diese vorteilhafte Ausgestaltung trägt zu einer sehr kleinen und kompakten Bauform der Steckverbindung bzw. des Aufnahmeteils 2 bei, weil ohne die bevorzugte radiale Verformbarkeit des Lösewerkzeugs 50 bzw. der Hülsen-Abschnitte das Halteringelement 10 im Bereich der Schrägflächen 54 mit größeren Durchmesser, d. h. mit radial größeren Schrägflächen 54, ausgebildet sein müßte, um mit dem - dann starren, unbeweglichen - Löseabschnitt 68 übe die Schrägflächen 54 die Rastarme 36 vollständig bis zur Freigabe des Steckerteils 4 spreizen zu können.

Grundsätzlich kann es sich bei dem Lösewerkzeug 50 um ein manuell zuzuführendes Teil handeln. Allerdings betrifft die vorliegende Erfindung auch eine speziell angepaßte Lösevorrichtung 60 (siehe Fig. 5 und 6), wobei das Lösewerkzeug 50 innerhalb eines Gehäuses 62 angeordnet ist. Das Gehäuse 62 weist eine Aufnahmeöffnung 64 für das Einsatzteil 6 auf, wobei es sich bei der dargestellten Ausführung entsprechend dem Außengewinde 14 um eine Gewindebohrung handelt. Insofern entspricht die Aufnahmeöffnung 64 derjenigen des jeweiligen Gehäuseteils, für das das Aufnahmeteil 2 vorgesehen ist. Hierbei ist das Lösewerkzeug 50 derart in dem Gehäuse 62 angeordnet, dass durch Einsetzen bzw. Einschrauben des Aufnahmeteils 2 in die Aufnahmeöffnung 64 das Lösewerkzeug 50 selbsttätig gegen die Schrägflächen 54 der Rastarme 36 zum Spreizen derselben wirkt. Dabei ist bevorzugt das Lösewerkzeug 50 derart in Richtung einer Einsetzachse 66 beweglich geführt und mit einer Federkraft F beaufschlagt, dass es stets mit einer vorbestimmten maximalen, der Federkraft F entsprechenden Betätigungskraft gegen das Halteringelement 10 wirkt. Dadurch wird somit eine Kraftbegrenzung erreicht, so dass die Betätigungskraft nicht von dem Maß des Einschraubens abhängt, sondern allein von der Federkraft F. Zudem bewirkt die Axialbeweglichkeit des Lösewerkzeugs 50 in Verbindung mit der Federkraft auch einen Ausgleich von Fertigungstoleranzen.

Wie oben bereits angedeutet wurde, ist das Lösewerkzeug 50 gemäß Fig. 5 im Bereich eines hülsenförmigen Löseabschnittes 68 durch axiale Schlitze 70 in mehrere radialelastisch verformbare Abschnitte 72 unterteilt. Diese Abschnitte 72 sind gemäß Fig. 7 durch Zusammenwirken mit der Konusfläche 56 des Steckerschaftes 12 derart spreizbar, dass dadurch ein zusätzliches Spreizen der Rastarme 36 des Halteringelementes 10 bewirkt wird. Dies ist anhand der in Fig. 7a eingezeichneten Pfeile leicht nachvollziehbar; durch Axialbewegung in Pfeilrichtung 74 wirkt der Steckerschaft 12 mit der Konusfläche 56 gegen die Lösewerkzeug-Abschnitte 72, so dass diese in Pfeilrichtung 76 gespreizt werden. Wenn nachfolgend die Abschnitte 72 zur Anlage an den Schrägflächen 54 der Rastarme 36 kommen, wird dadurch eine verstärkte Spreizbewegung in Pfeilrichtung 78 bis in die in Fig. 7b dargestellte Lösestellung bewirkt.

## Patentansprüche

1. Aufnahmeteil (2) einer Fluid-Steckverbindung, bestehend aus einem lösbar in eine Anschlußöffnung eines Gehäuseteils einsetzbaren Einsatzteil (6) mit einer Durchgangsöffnung (8) und einem derart im Bereich der Durchgangsöffnung (8) gehalterten, radialelastisch verformbaren Haltering (10), dass ein mit einem Steckerschaft (12) von einer Einsteckseite (16) her dichtend in die Durchgangsöffnung (8) einzusteckendes Steckerteil (4) durch das Halteringelement (10) formschlüssig gegen Lösen verrastbar ist, wobei das Halteringelement (10) auf der der Einsteckseite (16) gegenüberliegenden Stirnseite (18) des Einsatzteils (6) mit einem Stecker-Arretierabschnitt (20) außerhalb der Durchgangsöffnung (8) des Einsatzteils (6) angeordnet ist und über einen in das Einsatzteil (6) eingreifenden Halteabschnitt (22) mit dem Einsatzteil (6) verbunden ist,
**dadurch gekennzeichnet, dass** das Halteringelement (10) über den Halteabschnitt (22) mit dem Einsatzteil (6) verrastet ist und auf seinem Außenumfang einen radialen Ringansatz (46) aufweist, der zur Aufnahme von in Löserichtung wirkenden Stecker-Haltekräften und zur Einsetzbegrenzung vor der Stirnseite (18) des Einsatzteils (6) liegt.

2. Aufnahmeteil nach Anspruch 1,
**dadurch gekennzeichnet, dass** das Halteringelement (10) mit dem Arretierabschnitt (20) und dem Halteabschnitt (22) als einstückiges Formteil aus Kunststoff ausgebildet ist.

3. Aufnahmeteil nach Anspruch 1 oder 2,
**dadurch gekennzeichnet, dass** der Halteabschnitt (22) von einem axial in die Durchgangsöffnung (8) eingreifenden Ringkragen (24) mit einer radial nach außen vorspringenden und eine innerhalb der Durchgangsöffnung (8) gebildete Haltekante (30) formschlüssig rastend hintergreifenden Rastkante (26) gebildet ist.

4. Aufnahmeteil nach Anspruch 3,
**dadurch gekennzeichnet, dass** der Ringkragen (24) im Bereich der Rastkante (26) durch mindestens zwei axiale Schlitze (32) in radial federelastische Rastbereiche unterteilt ist.

5. Aufnahmeteil nach Anspruch 3 oder 4,
**dadurch gekennzeichnet, dass** derHalteabschnitt(22)des Halteringelementes (10) derart in die Durchgangsöffnung (8) des Einsatzteils (6) eingreift, dass er durch den eingesteckten und verrasteten Steckerschaft (12) gegen Lösen von der Haltekante (30) blockiert wird.

6. Aufnahmeteil nach einem der Ansprüche 1 bis 5,
**dadurch gekennzeichnet, dass** der Arretierabschnitt (20) aus mindestens zwei radialsymmetrisch ausgebildeten, jeweils durch axiale Schlitze (38) getrennten und radial federelastischen Rastarmen (36) mit radial nach innen weisenden Rastansätzen (40) besteht, die mit einer Raststufe (42) des eingesteckten Steckerschaftes (12) formschlüssig rastend zusammenwirken.

7. Aufnahmeteil nach Anspruch 6,
**dadurch gekennzeichnet, dass** sich die die Rastarme (36) voneinander trennenden Schlitze (38) axial über den Bereich des Ringansatzes (46) hinaus erstrecken.

8. Aufnahmeteil nach Anspruch 4 und Anspruch 6 oder 7,
**dadurch gekennzeichnet, dass** die den Halteabschnitt (22) unterteilenden Schlitze (32) einerseits und die die Rastarme (36) trennenden Schlitze (38) andererseits in Umfangsrichtung gegeneinander versetzt sind, wobei sie sich vorzugsweise in axialer Richtung überlappen.

9. Aufnahmeteil nach einem der Ansprüche 1 bis 8,
**dadurch gekennzeichnet, dass** das Halteringelement (10) auf seiner freien, in die der Einsteckseite (16) gegenüberliegende Richtung weisenden Seite derart ausgebildet ist, dass es mittels eines Lösewerkzeugs (50) zur Freigabe des Steckerteils (4) radial spreizbar ist.

10. Aufnahmeteil nach einem der Ansprüche 6 bis 9,
**dadurch gekennzeichnet, dass** dieRastarme(36)anihren freien Stirnenden axiale, sich über die Rastansätze (40) hinaus erstreckende Löseansätze (52) mit inneren, insgesamt konusförmigen Schrägflächen (54) derart aufweisen, dass mit einem im Wesentlichen hülsenförmigen Lösewerkzeug (50) durch axialen Andruck über die Schrägflächen (54) die Rastarme (36) spreizbar sind.

11. Aufnahmeteil nach Anspruch 10,
**dadurch gekennzeichnet, dass** derSteckerschaft(12)an seinem freien Ende eine äußere Konusfläche (56) derart aufweist, dass sich in der verrasteten Arretierstellung zwischen der Konusfläche (56) und den Schrägflächen (54) der Rastarme (36) ein sich in Einführrichtung des Lösewerkzeugs (50) verengender Einführringraum (58) ergibt.

12. Aufnahmeteil nach einem oder mehreren der vorhergehenden Ansprüche mit einer Lösevorrichtung (60) zum Lösen eines eingesteckten und arretierten Steckerteils (4) von dem Aufnahmeteil (2),
**gekennzeichnet durch** ein im Wesentlichen hülsenförmiges Lösewerkzeug (50) zum Spreizen der Rastarme (36) **durch** axiales Andrücken gegen das Halteringelement (10).

13. Aufnahmeteil nach Anspruch 12,
**dadurch gekennzeichnet, dass** das Lösewerkzeug (50) derart in einem eine Aufnahmeöffnung (64) für das Einsatzteil (6) aufweisenden Gehäuse (62) angeordnet ist, dass durch Einsetzen des Aufnahmeteils (2) in die Aufnahmeöffnung (64) das Lösewerkzeug (50) selbsttätig gegen die Schrägflächen (54) der Rastarme (36) zum Spreizen derselben wirkt.

14. Aufnahmeteil nach Anspruch 13,
**dadurch gekennzeichnet, dass** das Lösewerkzeug (50) derart in Richtung einer Einsetzachse (66) beweglich geführt und mit einer Federkraft (F) beaufschlagt ist, dass das Lösewerkzeug (50) mit einer vorbestimmten, der Federkraft (F) entsprechenden Betätigungskraft gegen das Halteringelement (10) wirkt.

15. Aufnahmeteil nach einem der Ansprüche 12 bis 14,
**dadurch gekennzeichnet, dass** das Lösewerkzeug (50) im Bereich eines hülsenförmigen Löseabschnittes (68) durch axiale Schlitze (70) in mehrere radialelastisch verformbare Abschnitte (72) unterteilt ist, die durch Zusammenwirken mit einer Konusfläche (56) des Steckerschaftes (12) derart spreizbar sind, dass **dadurch** ein zusätzliches Spreizen der Rastarme (36) des Halteringelementes (10) bewirkt wird.

16. Aufnahmeteil nach einem der Ansprüche 13 bis 15,
**dadurch gekennzeichnet, dass** dieAufnahmeöffnung(64)des Gehäuses (62) als Gewindebohrung zum Einschrauben eines Außengewindes (14) des Einsatzteils (6) ausgebildet ist.

## Claims

1. Receiving part (2) of a fluid plug-in connection, comprising an insert part (6), which can be releasably inserted into a connection opening of a housing part and has a through-opening (8), and a retaining ring (10) held in the region of the through-opening (8) and radially elastically deformable in such a manner that a plug part (4) to be plugged sealingly into the through-opening (8) by a plug shank (12) from a plug-in side (16) can be latched in a form-locked manner against release by the retaining ring element (10), the retaining ring element (10) being arranged, on the front side (18) of the insert part (6) opposite the plug-in side (16), with a plug-locking section (20) outside the through-opening (8) of the insert part (6) and being connected to the insert part (6) via a retaining section (22) engaging in the insert part (6),
**characterised in that** the retaining ring element (10) is latched to the insert part (6) via the retaining section (22) and has on its outer circumference a radial annular lug (46) which is located in front of the front side (18) of the insert part (6) in order to take up plug-retaining forces acting in the release direction and to limit insertion.

2. Receiving part according to Claim 1,
**characterised in that** the retaining ring element (10) is formed with the locking section (20) and the retaining section (22) as a one-piece moulding from plastic.

3. Receiving part according to Claim 1 or 2, **characterised in that** the retaining section (22) is formed by an annular collar (24), which engages axially in the through-opening (8) and has a latching edge (26) projecting radially outwards and engaging behind in a form-locked latching manner a retaining edge (30) formed inside the through-opening (8).

4. Receiving part according to Claim 3,
**characterised in that** the annular collar (24) is divided in the region of the latching edge (26) into radially spring-elastic latching regions by at least two axial slots (32).

5. Receiving part according to Claim 3 or 4, **characterised in that** the retaining section (22) of the retaining ring element (10) engages in the through-opening (8) of the insert part (6) in such a manner that it is blocked against release from the retaining edge (30) by the plugged-in and latched plug shank (12).

6. Receiving part according to one of Claims 1 to 5, **characterised in that** the locking section (20) comprises at least two radially symmetrically formed and radially spring-elastic latching arms (36) each separated by axial slots (38) and having radially inward-facing latching lugs (40) which cooperate in a form-locked latching manner with a latching step (42) of the plugged-in plug shank (12).

7. Receiving part according to Claim 6,
**characterised in that** the slots (38) separating the latching arms (36) from one another extend axially beyond the region of the annular lug (46).

8. Receiving part according to Claim 4 and Claim 6 or 7,
**characterised in that** the slots (32) dividing the retaining section (22) on the one hand and the slots (38) separating the latching arms (36) on the other hand are offset from one another in the circumferential direction, and preferably overlap in the axial direction.

9. Receiving part according to one of Claims 1 to 8, **characterised in that** the retaining ring element (10) is formed, on its free side facing in the direction opposite the plug-in side (16), in such a manner that it can be radially spread by means of a releasing tool (50) to free the plug part (4).

10. Receiving part according to one of Claims 6 to 9, **characterised in that** the latching arms (36) have at their free front ends axial releasing lugs (52) extending beyond the latching lugs (40) and having inner, overall conical, oblique surfaces (54), so that the latching arms (36) can be spread with a substantially sleeve-shaped releasing tool (50) by axial pressure via the oblique surfaces (54).

11. Receiving part according to Claim 10,
**characterised in that** the plug shank (12) has at its free end an outer conical surface (56), so that in the latched locking position an introducing annular space (58) which narrows in the direction of introduction of the releasing tool (50) results between the conical surface (56) and the oblique surfaces (54) of the latching arms (36).

12. Receiving part according to one or more of the preceding claims, having a releasing device (60) for releasing a plugged-in and locked plug shank (4) from the receiving part (2),
**characterised by** a substantially sleeve-shaped releasing tool (50) for spreading the latching arms (36) by axially pressing against the retaining ring element (10).

13. Receiving part according to Claim 12,
**characterised in that** the releasing tool (50) is arranged in a housing (62) having a receiving opening (64) for the insert part (6) in such a manner that by inserting the receiving part (2) into the receiving opening (64) the releasing tool (50) automatically acts against the oblique surfaces (54) of the latching arms (36) to spread the same.

14. Receiving part according to Claim 13,
**characterised in that** the releasing tool (50) is guided movably in the direction of an insertion axis (66) and subjected to a spring force (F) in such a manner that the releasing tool (50) acts against the retaining ring element (10) with a predetermined actuating force corresponding to the spring force (F).

15. Receiving part according to one of Claims 12 to 14, **characterised in that** the releasing tool (50) is divided in the region of a sleeve-shaped releasing section (68) by axial slots (70) into a plurality of radially elastically deformable sections (72) which by cooperating with a conical surface (56) of the plug shank (12) can be spread in such a manner that additional spreading of the latching arms (36) of the retaining ring element (10) is brought about thereby.

16. Receiving part according to one of Claims 13 to 15, **characterised in that** the receiving opening (64) of the housing (62) is formed as a threaded bore for screwing in an external thread (14) of the insert part (6).

## Revendications

1. Élément de réception (2) d'un système de raccordement enfichable pour fluides, formé par un élément insérable (6), qui est destiné à être inséré de manière amovible dans une ouverture de raccordement d'un élément de type boîtier et qui est muni d'une ouverture de passage (8) et d'une bague de retenue (10) déformable élastiquement dans la direction radiale et maintenue dans la zone de l'ouverture de passage (8) de telle sorte qu'un raccord mâle (4), destiné à être enfiché avec une tige (12) à partir d'un côté d'enfichage (16) de manière étanche dans l'ouverture de passage (8), peut être bloqué par conjugaison de forme par la bague de retenue (10) pour empêcher toute désolidarisation, ladite bague de retenue (10) étant agencée sur la face frontale (18) de l'élément insérable (6), opposée au côté d'enfichage (16), avec un segment d'immobilisation du raccord mâle (20) en dehors de l'ouverture de passage (8) de l'élément insérable (6) et étant reliée à l'élément insérable (6) par l'intermédiaire d'une partie de retenue (22) engagée dans l'élément insérable (6),
**caractérisé en ce que** la bague de retenue (10) est bloquée avec l'élément insérable (6) par l'intermédiaire de la partie de retenue (22) et comporte, sur sa périphérie extérieure, une saillie annulaire (46) radiale, qui est disposée devant la face frontale (18) de l'élément insérable (6), afin d'absorber des forces de retenue du raccord mâle agissant dans le sens de désolidarisation et afin de limiter l'engagement.

2. Élément de réception selon la revendication 1,
**caractérisé en ce que** la bague de retenue (10) est réalisée en matière plastique sous la forme d'une pièce moulée en un seul tenant avec le segment d'immobilisation (20) et la partie de retenue (22).

3. Élément de réception selon la revendication 1 ou 2,
**caractérisé en ce que** la partie de retenue (22) est formée par un collet annulaire (24), qui s'engage axialement dans l'ouverture de passage (8) et est muni d'un bord de blocage (26) en saillie radialement vers l'extérieur et enserrant par l'arrière de manière bloquée par conjugaison de forme un bord de retenue (30) formé à l'intérieur de l'ouverture de passage (8).

4. Élément de réception selon la revendication 3,
**caractérisé en ce que** le collet annulaire (24), dans la zone du bord de blocage (26), est fractionné en zones de blocage élastiquement flexibles radialement, par l'intermédiaire d'au moins deux fentes (32) axiales.

5. Élément de réception selon la revendication 3 ou 4,
**caractérisé en ce que** la partie de retenue (22) de la bague de retenue (10) s'engage dans l'ouverture de passage (8) de l'élément insérable (6), de telle sorte que la tige (12) du raccord mâle, enfichée et bloquée, bloque ladite bague pour l'empêcher de se désolidariser du bord de retenue (30).

6. Élément de réception selon l'une quelconque des revendications 1 à 5,
**caractérisé en ce que** le segment d'immobilisation (20) est formé par au moins deux bras de blocage (36) élastiquement flexibles radialement, qui sont réalisés de manière radialement symétrique, sont séparés respectivement par des fentes (38) axiales et sont munis de saillies de blocage (40), qui sont dirigées radialement vers l'intérieur et qui coopèrent en blocage par conjugaison de forme avec un épaulement de blocage (42) de la tige (12) enfichée du raccord mâle.

7. Élément de réception selon la revendication 6,
**caractérisé en ce que** les fentes (38) séparant les bras de blocage (36) l'un de l'autre s'étendent axialement au-delà de la zone de la saillie annulaire (46).

8. Élément de réception selon la revendication 4 et la revendication 6 ou 7,
**caractérisé en ce que**, d'une part, les fentes (32) fractionnant la partie de retenue (22) et, d'autre part, les fentes (38) séparant les bras de blocage (36) sont décalées les unes par rapport aux autres dans la direction circonférentielle, sachant qu'elles se chevauchent de préférence dans la direction axiale.

9. Élément de réception selon l'une quelconque des revendications 1 à 8,
**caractérisé en ce que** la bague de retenue (10), sur sa face libre orientée dans la direction opposée au côté d'enfichage (16), est réalisée de telle sorte qu'elle peut être écartée radialement au moyen d'un outil de déblocage (50) destiné à désolidariser le raccord mâle (4).

10. Élément de réception selon l'une quelconque des revendications 6 à 9,
**caractérisé en ce que** les bras de blocage (36), au niveau de leurs extrémités frontales libres, comportent des saillies de déblocage (52) axiales, s'étendant au-delà des saillies de blocage (40) et munies de surfaces inclinées (54) intérieures, dans l'ensemble en forme de cône, de telle sorte que les bras de blocage (36) peuvent être écartés sous l'effet d'une pression axiale sur les surfaces inclinées (54) au moyen d'un outil de déblocage (50) sensiblement en forme de manchon.

11. Élément de réception selon la revendication 10,
**caractérisé en ce que** la tige (12) du raccord mâle comporte au niveau de son extrémité libre une surface conique (56) extérieure, de telle sorte que, dans la position d'arrêt bloquée, il se forme, entre la surface conique (56) et les surfaces inclinées (54) des bras de blocage (36), un espace annulaire d'introduction (58) qui se rétrécit dans la direction d'enfichage de l'outil de déblocage (50).

12. Élément de réception selon une ou plusieurs des revendications précédentes, comportant un dispositif de déblocage (60) destiné à désolidariser de l'élément de réception (2) un raccord mâle (4) enfiché et immobilisé,
**caractérisé par** un outil de déblocage (50) sensiblement en forme de manchon destiné à écarter les bras de blocage (36) par une pression axiale contre la bague de retenue (10).

13. Élément de réception selon la revendication 12,
**caractérisé en ce que** l'outil de déblocage (50) est disposé dans un boîtier (62), muni d'une ouverture de réception (64) pour l'élément insérable (6), de telle sorte que, sous l'effet de l'engagement de l'élément de réception (2) dans l'ouverture de réception (64), l'outil de déblocage (50) agit automatiquement contre les surfaces inclinées (54) des bras de blocage (36) pour les écarter.

14. Élément de réception selon la revendication 13,
**caractérisé en ce que** l'outil de déblocage (50) est logé mobile dans la direction d'un axe d'enfichage (66) et est sollicité par une force de ressort (F), **en ce que** l'outil de déblocage (50) agit contre la bague de retenue (10) avec une force d'actionnement prédéterminée, correspondant à la force de ressort (F).

15. Élément de réception selon l'une quelconque des revendications 12 à 14,
**caractérisé en ce que** l'outil de déblocage (50), dans la zone d'un tronçon de déblocage (68) en forme de manchon, est scindé par des fentes (70) axiales en plusieurs tronçons (72) déformables élastiquement dans la direction radiale, lesquels, sous l'effet de la coopération avec une surface conique (56) de la tige (12) du raccord mâle, peuvent être écartés de telle sorte qu'il en résulte un écartement supplémentaire des bras de blocage (36) de la bague de retenue (10).

16. Élément de réception selon l'une quelconque des revendications 13 à 15,
**caractérisé en ce que** l'ouverture de réception (64) du boîtier (62) est réalisée sous la forme d'une forure taraudée pour y visser un filetage extérieur (14) de l'élément insérable (6).
